(19) **Europäisches Patentamt**

**European Patent Office**

**Office européen des brevets**

(11) **EP 1 476 613 B1**

(12) **EUROPÄISCHE PATENTSCHRIFT**

(45) Veröffentlichungstag und Bekanntmachung des Hinweises auf die Patenterteilung:
**04.10.2006  Patentblatt 2006/40**

(21) Anmeldenummer: **03702653.1**

(22) Anmeldetag: **18.02.2003**

(51) Int Cl.:
*E04C 5/03* (2006.01)          *E04C 5/08* (2006.01)
*F24D 3/14* (2006.01)          *E04B 5/48* (2006.01)

(86) Internationale Anmeldenummer:
**PCT/EP2003/001633**

(87) Internationale Veröffentlichungsnummer:
**WO 2003/069088 (21.08.2003 Gazette 2003/34)**

(54) **ROHRFÖRMIGER GERIPPTER BEWEHRUNGSSTAHL, VERFAHREN ZUM HERSTELLEN EINES ROHRFÖRMIGEN GERIPPTEN BEWEHRUNGSSTAHLS UND VERWENDUNG EINES ROHRFÖRMIGEN     BEWEHRUNGSSTAHLS**

TUBULAR, FLUTED REINFORCING STEEL, METHOD FOR PRODUCING A TUBULAR, FLUTED REINFORCING STEEL AND USE OF A TUBULAR REINFORCING STEEL

ACIER D'ARMATURE CANNELE TUBULAIRE, PROCEDE DE FABRICATION D'UN ACIER D'ARMATURE CANNELE TUBULAIRE ET SON UTILISATION

(84) Benannte Vertragsstaaten:
**AT BE BG CH CY CZ DE DK EE ES FI FR GB GR HU IE IT LI LU MC NL PT SE SI SK TR**

(30) Priorität: **18.02.2002   DE 10206819**

(43) Veröffentlichungstag der Anmeldung:
**17.11.2004   Patentblatt 2004/47**

(60) Teilanmeldung:
**04028479.6 / 1 512 805**

(73) Patentinhaber: **Aicher, Max**
**83395 Freilassing (DE)**

(72) Erfinder: **Aicher, Max**
**83395 Freilassing (DE)**

(74) Vertreter: **Kramer - Barske - Schmidtchen**
**Radeckestrasse 43**
**81245 München (DE)**

(56) Entgegenhaltungen:
**EP-A- 0 059 070          WO-A-01/68287**
**DE-A- 1 609 766          DE-A- 4 134 178**
**DE-A- 10 013 581         FR-A- 1 288 878**
**US-A- 5 533 309**

EP 1 476 613 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf eine Verwendung eines rohrförmigen gerippten Bewehrungsstahls, insbesondere einen durch Warmwalzen hergestellten, tiefgerippten rohrförmigen Bewehrungsstahl.

Ein im Stahlbeton einzusetzendes rohrförmiges Stahlteil mit einer ein Außengewinde bildenden Hochrippung ist aus der DE 100 13 581 A1 bekannt.

Solche gerippten Stahlröhren werden durch Kaltwalzen, z.B. ein sogenanntes Kaltpilgern, hergestellt.

Ein Verfahren zum Herstellen von nahtlosen Rohren ohne Rippung/Profilierung durch Warmwalzen ist im Stand der Technik bekannt. Eine Verwendung nach dem Oberbegriff des Anspruchs 1 ist aus der FR 1 288 878 bekannt.

Aufgabe der Erfindung ist es, eine verbesserte Verwendung eines rohrförmigen gerippten Bewehrungsstahls als vorgespanntes Stahlteil für Spannbeton anzugeben.

Diese Aufgabe wird gelöst durch eine Verwendung nach Anspruch 1. Eine Weiterbildung der Erfindung ist in dem Unteranspruch angegeben.

Weitere Merkmale und Zweckmäßigkeiten ergeben sich aus der Beschreibung von Ausführungsbeispielen anhand der Figuren. Von den Figuren zeigen:

Fig. 1 eine schematische Darstellung eines Stichs zum Warmwalzen eines rohrförmigen, tiefgerippten Bewehrungsstahls; und

Fig. 2 einen schematischen Querschnitt eines rohrförmigen, tiefgerippten Bewehrungsstahls nach einer Ausführungsform der Erfindung.

Ein Betonstahl mit Hochrippung wurde bisher als Bauteil für sogenannte Injektionsanker eingesetzt. Dabei wird die rohrförmige Ausbildung dazu genutzt, das durch den Injektionsanker zu injizierende Material, das heißt Frischbeton oder ein anderes aushärtendes Material, zu injizieren, und die Rippung diente zur Verankerung in (zur Herstellung des Verbunds mit) dem ausgehärteten Material (Beton oder ähnlichem).

Der Bewehrungsstahl nach den Ausführungsformen der Erfindung ist ein rohrförmiger und gerippter Bewehrungsstahl, der als ein Spannstahl verwendet wird.

Erfindungsgemäß liegt die Verwendungsart für rohrförmige, gerippte Bewehrungsstähle in der Herstellung von vorgespannten Stahlteilen für Spannbeton. Das rohrförmige Stahlteil kann durch Abdichten der Enden und Einfüllen eines nicht-kompressiblen Fluids wie eines Hydrauliköls unter hohem Druck vorgespannt werden. Durch die Vorspannung ergibt sich eine Verlängerung und Durchmesserreduzierung. Dieses vorgespannte Stahlteil wird dann entsprechend zur Bewehrung von Beton verwendet. Durch Ablassen des unter Druck stehenden, nicht-kompressiblen Fluids wird die Vorspannung gelöst, so dass sich das Stahlteil wieder verkürzt und ausdehnt. Dadurch wird die gerippte Außenwand des Stahlteils gegen den umgebenden Beton gepresst, so dass ein verbesserter Verbund hergestellt wird.

Bisher wurden rohrförmige, gerippte Bewehrungsstähle durch Kaltwalzen (Kaltpilgern) hergestellt. Ein solches Herstellungsverfahren ist aufwendig und daher kostenintensiv.

Nachfolgend wird ein Verfahren zum Herstellen von rohrförmigen, gerippten Bewehrungsstählen durch Warmwalzen mit Tiefrippung angegeben. Bisher wurde es für nicht möglich gehalten, rohrförmige, gerippte Stähle ohne Gegenlager (Sehle) zu walzen.

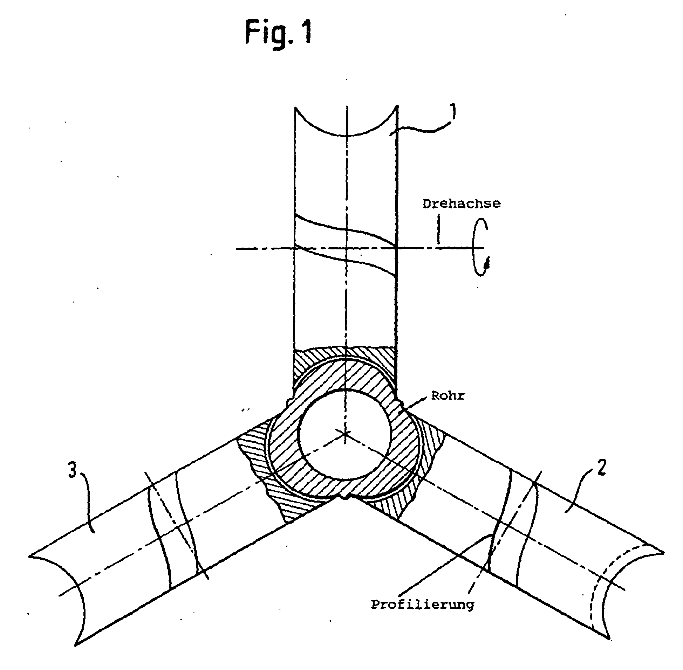

Das Verfahren nutzt das Warmwalzen, zum Beispiel beim sogenannte Streckreduzierverfahren, in Verbindung mit der Ausbildung einer Tiefrippung. Dabei wird vorzugsweise eine hohe Anzahl von Stichen/Gerüsten, bevorzugt mehr als zwanzig (zum Beispiel sechsundzwanzig Stiche) verwendet. Bevorzugterweise werden drei im Winkel von 120° angeordnete Rollen verwendet. Versuche, haben ergeben, dass es auch möglich ist, die Tiefrippung als umlaufende Rippung mit einer Steigung nach Art eines Gewindes zu versehen. Ein Stich (Gerüst), das in einem solchen Warmwalzverfahren verwendet wird, ist schematisch in Fig. 1 gezeigt. Die Rollen 1, 2, 3 sind im Winkel von 120° relativ zueinander angeordnet. In den Rollen wenigstens eines Teils der Stiche/Gerüste beginnend von dem letzten Stich/Gerüst ist eine Profilierung ausgebildet, die eine Tiefrippung ausbildet. Da die Rollen zwangsläufig keine ununterbrochen umlaufenden Rippen ausbilden können, ergeben sich eine Anzahl von Rippensegmenten, die der Anzahl der verwendeten Rollen entspricht. Zwischen den Rippensegmenten ausgebildete Nähte. In Fig. 1 sind die Profilierungen angedeutet.

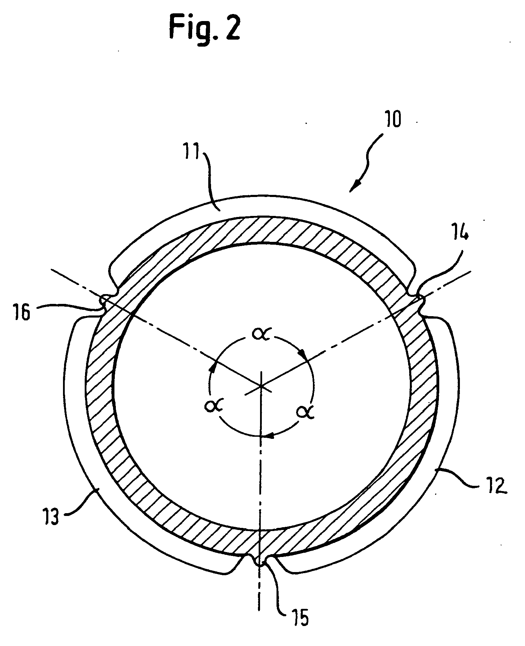

Ein Beispiel eines entsprechenden Rohres (Bewehrungsstahls) 10 ist in Fig. 2 schematisch im Querschnitt dargestellt. Zwischen den Rippensegmenten 11, 12, 13 sind entsprechende Nähte 14, 15, 16 ausgebildet.

Versuche haben ergeben, dass die Ausbildung der Segmente nach Art einer umlaufenden Rippe mit Gewindesteigung möglich ist. Zur Ausbildung eines gängigen Gewindes sind dann lediglich die Nähte zu entfernen.

Die Rohre (Bewehrungsstähle) werden mit Außendurchmessern von 20mm-150mm hergestellt. Die Bewehrungsstähle haben handelsübliche Qualitäten wie BST 500 für Betonstähle oder $Rm < 1600$ N/mm$^2$ oder handelsübliche Qualitäten nach den nationalen Anforderungen.

Bei der Verwendung eines solchen rohrförmigen tiefgerippten Bewehrungsstahls zur Bewehrung von Stahlbeton kann die bezogenen Rippenfläche aufgrund der rohrförmigen Ausbildung reduziert werden. Die Reduzierung ergibt sich nach der folgenden Formel:

$$f_R^{'} = f_R\left(1 - \frac{F_H}{F_G}\right)$$

wobei $f_R$ die bezogene Rippenfläche für einen Vollstab gleichen Durchmessers, $f_R'$ die bezogenen Rippenfläche für den rohrförmigen, gerippten Bewehrungsstahl, $F_H$ die Querschnittsfläche des Rohrinneren (also des hohlen Rohrinneren) und $F_G$ die Querschnittsfläche des Rohrs (also des hohlen Rohrinneren und des Rohrmantels) sind.

## Patentansprüche

1. Verwendung eines rohrförmigen gerippten Bewehrungsstahlteils als vorgespanntes Stahlteil für Spannbeton, **dadurch gekennzeichnet, dass** das rohrförmige Bewehrungsstahlteil durch Abdichten der Enden und Einfüllen eines nicht-kompressiblen Fluids wie eines Hydrauliköls unter hohem Druck derart vorgespannt wird, dass sich eine Verlängerung und Durchmesserreduzierung ergibt, dieses vorgespannte Bewehrungsstahlteil dann entsprechend zur Bewehrung von Beton verwendet wird, und durch Ablassen des unter Druck stehenden, nicht kompressiblen Fluids die Vorspannung gelöst wird, so dass sich das Bewehrungsstahlteil wieder verkürzt und ausdehnt und **dadurch** die gerippte Außenwand des Bewehrungsstahlteils gegen den umgebenden Beton gepresst wird.

2. Verwendung nach Anspruch 1, bei der bei dem rohrförmigen, gerippten Bewehrungsstahlteil eine Tiefrippung durch Warmwalzen ausgebildet ist und die bezogenen Rippenfläche ($f_R'$), gemäß der Formel

$$f_R^{'} = f_R\left(1 - \frac{F_H}{F_G}\right)$$

aus der notwendigen bezogenen Rippenfläche ($f_R$) für einen Vollstab gleichen Durchmessers abgeleitet ist, wobei ($F_H$) die Querschnittsfläche des Rohrinneren (also des hohlen Rohrinneren) und ($F_G$) die Querschnittsfläche des Rohrs (also des hohlen Rohrinneren und des Rohrmantels) sind.

## Claims

1. Use of a tubular, ribbed reinforcing steel part as a pretensioned steel part for prestressed concrete, **characterized in that** the tubular reinforcing steel part is pretensioned by sealing the ends and pouring in a non-compressible fluid such as a hydraulic oil under high pressure such that an elongation and reduction in diameter result, this pretensioned reinforcing steel part is then correspondingly used for reinforcing concrete, and the pretensioning is released by discharging the non-compressible fluid which is under pressure, with the result that the reinforcing steel part is shortened and expanded again, and consequently the ribbed outer wall of the reinforcing steel part is pressed against the surrounding concrete.

2. Use according to Claim 1, in which a deep ribbing is formed in the tubular, ribbed reinforcing steel part by hot rolling, and the related rib area $f_R'$ is derived according to the formula

$$f_R^{'} = f_R\left(1 - \frac{F_H}{F_G}\right)$$

from the necessary related rib area ($f_R$) for a solid bar of the same diameter, where ($F_H$) is the cross-sectional area of the interior of the tube (that is to say of the hollow interior of the tube) and ($F_G$) is the cross-sectional area of the tube (that is to say of the hollow interior of the tube and of the tube shell).

## Revendications

1. Utilisation d'un élément d'acier d'armature tubulaire cranté en tant qu'élément d'acier précontraint pour béton précontraint, **caractérisé en ce qu'** on précontraint l'élément d'acier d'armature tubulaire cranté, en obturant les extrémités et en introduisant un fluide incompressible tel qu'une huile hydraulique sous haute pression, de telle manière qu'il se produise un allongement et une réduction du diamètre, on utilise cet élément d'acier d'armature précontraint de la façon voulue pour armer du béton, et on détend la précontrainte en laissant s'échapper le fluide incompressible qui est sous pression, de sorte que l'élément d'acier d'armature se raccourcit et se dilate de nouveau et que, sous cet effet, la paroi externe de l'élément d'acier est pressée contre le béton qui l'entoure.

2. Utilisation selon la revendication 1, dans laquelle, dans l'élément d'acier d'armature tubulaire cranté le crantage profond est créé par laminage à chaud et la surface spécifique des crans ($f_R'$) est déduite selon la formule

$$f_R' = f_R\left(1 - \frac{F_H}{F_G}\right)$$

de la surface spécifique nécessaire des crans ($f_R$) pour une barre pleine de diamètre identique, ($F_H$) étant la surface de section transversale de l'intérieur du tube (donc de l'intérieur creux du tube) et ($F_G$) étant la surface de section transversale du tube (donc de l'intérieur creux du tube et de l'enveloppe du tube).

# Fig. 1

Drehachse

Rohr

Profilierung

3

2

1

5

# Fig. 2